(19) Europäisches Patentamt
European Patent Office
Office européen des brevets

(11) EP 1 617 240 A1

(12) # EUROPEAN PATENT APPLICATION
published in accordance with Art. 158(3) EPC

(43) Date of publication:
**18.01.2006 Bulletin 2006/03**

(21) Application number: **04728465.8**

(22) Date of filing: **20.04.2004**

(51) Int Cl.:
***G02B 3/02*** *(1968.09)* ***G02B 1/04*** *(1968.09)*
***C08L 35/02*** *(1985.01)* ***B29C 39/10*** *(1985.01)*
*B29K 33/04 (1985.01)* *B29L 11/00 (1985.01)*

(86) International application number:
**PCT/JP2004/005655**

(87) International publication number:
**WO 2004/095087 (04.11.2004 Gazette 2004/45)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **21.04.2003 JP 2003115659**
**28.07.2003 JP 2003202637**
**29.01.2004 JP 2004022264**

(71) Applicant: **SEIKO EPSON CORPORATION**
**Tokyo 160-0811 (JP)**

(72) Inventors:
- **KOJIMA, Tadao**
**Suwa-Shi,**
**Nagano 3928502 (JP)**
- **SHIMIZU, Akihiro**
**Suwa-Shi,**
**Nagano 3928502 (JP)**
- **KOMATSU, Akira**
**Suwa-Shi,**
**Nagano 3928502 (JP)**

(74) Representative: **HOFFMANN EITLE**
**Patent- und Rechtsanwälte**
**Arabellastrasse 4**
**D-81925 München (DE)**

(54) **RESIN COMPOSITION FOR HYBRID LENS, METHOD FOR PRODUCING HYBRID LENS, HYBRID LENS AND LENS SYSTEM**

(57) A resin composition for use in a hybrid lens containing a radical polymerizable monomer and a silane coupling agent. A specified di(meth)acrylate compound and a specified mono(meth)acrylate compound are used preferably as the radical polymerizable monomer A hybrid lens molding die in which a glass lens base material and a glass mold of transferring an aspherical shape are opposed to each other is used, a resin composition for use in the hybrid lens is filled between them and UV-rays are irradiated from both sides of the glass lens base material and the glass mold to manufacture a hybrid lens in which the resin layer is bonded on the glass lens base material. A high performance hybrid lens having a resin layer of large thickness, with a large localized thickness and capable of increasing the aspherical quantity can be manufactured by the method.

F I G. 1

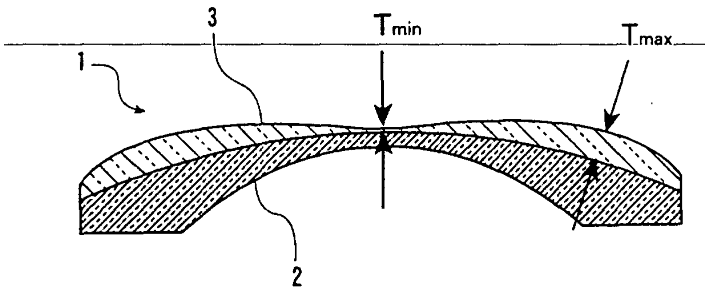


EP 1 617 240 A1

**Description**

Technical Field

The present invention concerns a technique for manufacturing a hybrid lens in which a resin layer is bonded to a glass lens base material.

Background Art

Heretofore, optical elements having aspherical surface have been frequently used so far in various kinds of optical equipments with an aim of improving the performance, reducing the size and the weight and saving the cost of optical elements such as lenses or reflectors. Particularly, projection lenses for use in liquid crystal projectors, constitute highly sophisticated optical system since images have to be magnified at a high ratio in a short distance and they require a number of lenses necessary for aberration correction. Further, the final lens in the optical system has a large diameter.
When an optical system is constituted by using aspherical lenses, the number of lenses necessary for aberration correction can be decreased greatly compared with a case of constituting the system only by spherical lenses. As the aspherical quantity of the aspherical lens increases, the number of the lenses that can be saved also increases, but it has been extremely difficult so far to manufacture an aspherical lens of a large aspherical quantity, particularly, an aspherical lens of a large diameter.
While the method of manufacturing the aspherical lens includes a method of precisely grinding and polishing a glass lens, it involves a problem that the production cost is extremely high.
As other method of manufacturing an aspherical lens, a manufacturing method of forming by stacking a resin layer of an aspherical shape over a spherical glass lens has been known and such an aspherical lens is referred to as a hybrid lens.
A method of manufacturing a hybrid lens generally comprises combining an aspherical glass lens as a base material with a molding die for transferring an aspherical shape, filling an UV-ray curable resin composition between the base material and the molding die, irradiating UV-rays from the side of the base material thereby curing the UV-ray curable resin composition, then removing the molding die and bonding the resin layer formed with an aspherical shape by transfer from the molding die to the base material.
A technique of manufacturing such a hybrid lens is described in JP-A-62-258401, JP-B-6-93043, JP-A-5-34509 and JP-A-2002-228805.
However, in existent UV-ray curable resin compositions, when the molding die is released after curing the resin on the glass lens base material, the glass lens base material has sometimes been cracked. Further, the surface of the glass lens base material and the resin layer have been peeled due to thermal stress caused by the change of the circumstantial temperature during storage sometime failing to maintain optical characteristics. Such phenomena are conspicuous particularly in a case where the diameter is large and the resin layer is thick and those having a diameter of 60 mm or more with the maximum thickness of the resin layer of 850 $\mu$m or more could not actually be manufactured. Accordingly, ingenuity was necessary for the molding die upon cure molding of the aspherical shape as shown, for example, in Patent Document 4. Further, cure molding per se was virtually impossible for a lens in which the maximum resin layer thickness is four times or more the minimum resin layer thickness, that is a hybrid lens of a so-called intense localized thickness. The thickness of the resin layer was about 10 to 300 $\mu$m and about 1 mm at the greatest. Further, the difference in the localized thickness was 3 or Less as the ratio of maximum thickness/minimum thickness.
Accordingly, it was impossible to manufacture a hybrid lens having a resin layer of a large aspherical quantity by the formation of the resin layer and the performance as the aspherical lens was insufficient.
The present invention has been achieved in view of the foregoing situations and it is an object thereof to provide a resin composition for use in a hybrid lens having a resin layer of a large thickness, capable of manufacturing a high performance hybrid lens with a large localized thickness and capable of increasing the aspherical quantity.
Further, it is an object of the present invention to provide a method of manufacturing a hybrid lens capable of manufacturing a high performance hybrid lens having a resin layer of a large thickness, with a large localized thickness and of large aspherical quantity.
Further, it is an object of the present invention is to provide a high performance hybrid lens having a resin layer of a large thickness, with a large localized thickness, and of large aspherical quantity.
Further, it is an object of the present invention to provide a lens system by using a high performance hybrid lens having a large aspherical quantity.

Disclosure of the Invention

For attaining the foregoing object, the present invention, at first, provides a resin composition for use in a hybrid

lens in which the resin composition used for forming a resin layer of a hybrid lens comprising a resin layer bonded to a glass lens base material contains a radical polymerizable monomer and a silane coupling agent.

The silane coupling agent can improve the adhesion between the glass lens base material and the resin layer, as well as can improve the surface hardness of the resin layer which would cause a trouble in a case of softening the resin layer in order to moderate a stress to the glass lens base material caused by the polymerization shrinkage thereby providing practical usefulness. As a result, this enables to manufacture a high performance hybrid lens having a resin layer of a large thickness, with a large localized thickness and capable of increasing the aspherical quantity.

The present invention provides, secondly, a the first resin composition for use in a hybrid lens as described above, wherein the radical polymerizable monomer contains the following ingredient A and ingredient B:

Ingredient A: a di(meth)acrylate compound represented by the following general formula (I):

[Chemical formula 3]

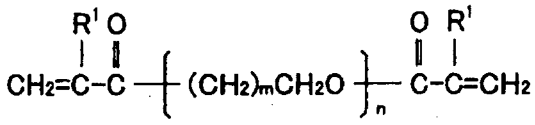

· · · (I)

(where $R^1$ represents hydrogen or a methyl group, m represents an integer of 2 to 5 and n represents an integer of 1 to 16)

Ingredient B: a mono(meth)acrylate compound represented by following general formula (II):

[Chemical formula 4]

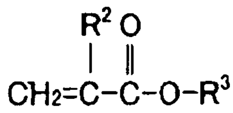

· · · (II)

(where $R^2$ represents hydrogen or a methyl group and $R^3$ represents a cycloaliphatic hydrocarbon group with a number of carbon atoms of from 5 to 16).

The di(meth)acrylate compound as the ingredient A has a function of softening the resin layer, moderating the stress to the glass lens base material caused by the polymerization shrinkage and providing durability, and the mono(meth)acrylate compound as the ingredient B has a function of improving a necessary surface accuracy as the hybrid lens. It is possible to manufacture a high performance hybrid lens having a resin layer of a large thickness, with a large localized thickness and capable of increasing the aspherical quantity by using the acrylate compounds described above as the radical polymerizable monomer.

The present invention provides, thirdly, the second resin composition for use in a hybrid lens as described above, wherein the radical polymerizable monomer further contains the following ingredient C:

Ingredient C: a urethanepoly(meth)acrylate having two or more (meth)acryloyloxy groups in one molecule, or an epoxypoly(meth)acrylate having two or more (meth)acryloyloxy groups in one molecule.

The resin layer can be provided with heat resistance necessary for the resin layer by blending the ingredient C.

The present invention provides, fourthly, the second resin composition for use in the hybrid lens as described above, wherein the content of the ingredient A is from 30 to 90 parts by weight and the content of the ingredient B is from 5 to 40 parts by weight.

It is possible to manufacture a high performance hybrid lens having a resin layer of a large thickness, with a

large localized thickness and capable of increasing the aspherical quantity since it is possible to soften the resin layer, moderating the stress to the glass lens base material caused by the polymerization shrinkage and ensure necessary surface accuracy by comprising the ingredient A as a main ingredient and properly blending the ingredient B.

The present invention provides, fifthly, the third resin composition for use in a hybrid lens as described above, wherein the content of the ingredient C is from 5 to 50 parts by weight.

It is possible to provide the resin layer with necessary heat resistance and improve the hardness by properly blending the ingredient C.

The present invention provides, sixthly, the first resin composition for use in a hybrid lens as described above, wherein the content of the silane coupling agent is from 1 to 10 parts by weight.

In a case where the content of the silane coupling agent is insufficient, the effect is not sometimes developed and in a case where the content is excessive, the proceeding rate of the polymerizing reaction is increased and the injection workability to the cavity is sometimes lowered extremely.

The present invention provides, seventhly, a method of manufacturing a hybrid lens including mold assembling steps of opposing a glass lens base material and a glass mold having a diameter substantially equal with that of the glass lens base material for transferring an aspherical shape, adhering an adhesive tape on the lateral surface of them to seal a gap between the glass lens base material and the glass mold thereby assembling a hybrid lens molding die.

By using the glass mold for the molding die for transferring the aspherical shape, ultraviolet rays can be irradiated from both sides of the glass lens base material and the glass mold. Since a sufficient amount of ultraviolet rays can be supplied even to a portion of an increased thickness at the center thereof by irradiating UV-rays from the both sides, occurrence of polymerization strain can be suppressed as much as possible, occurrence of peeling or cracking in the resin layer can be suppressed and occurrence of optical strain can also be suppressed. Thus, a resin layer of a large thickness can be formed. Further, a cavity capable of forming a thick resin layer can be formed easily by an adhesive tape sealing method of assembling the hybrid lens molding die by opposing the glass lens base material and the glass mold having a diameter substantially identical therewith and adhering an adhesive tape on each of the lateral surfaces of them thereby sealing the gap between the glass lens base material and the molding die. Further, since the adhesive tape does not interrupt the UV-ray irradiation from both sides, a sufficient amount of UV-ray can be irradiated also at the periphery of the resin layer and occurrence of polymerization strain can be suppressed even in a case of forming a thick resin layer to the peripheral edge.

The present invention provides, eighthly, the seventh manufacturing method of the hybrid lens as described above, wherein the maximum thickness for the gap between the glass lens base material and the glass mold is within a range from 1 to 10 mm and the ratio of maximum thickness/minimum thickness for the gap between the glass lens base material and the glass mold within an effective diameter is 4 or more and 20 or less.

Since the UV-rays can be irradiated from both sides of the glass lens base material and the glass mold by using the glass die for the molding die, a sufficient amount of UV-rays can be supplied also to a portion of large thickness at the center thereof. As a result, since occurrence of polymerization strain can be suppressed as less as possible and occurrence of peeling, cracking and the like, and occurrence of optical strain can be suppressed upon curing of the UV-ray curable resin composition filled in a cavity with a large difference in the localized thickness, a resin layer having a large thickness and with large difference in the localized thickness can be formed.

The present invention provides, ninthly, the seventh manufacturing method of a hybrid lens as described above, wherein the method comprises, after the mold assembling step, an injection step of filling an UV-ray curable resin composition into a gap between the glass lens base material and the glass mold, and
a curing step of irradiating UV-rays to the UV-ray curable resin composition filled into the gap between the glass lens base material and the glass mold from both sides of the glass lens base material and the glass mold thereby curing the UV-ray curable composition.

By irradiating UV-rays from both sides of the glass lens base material and the glass mold, since a sufficient amount of UV-rays can be supplied even to a portion of large thickness at the center thereof and, as a result, occurrence of polymerization strain can be suppressed as less as possible, and occurrence of peeling, cracking or the like and occurrence of optical strain can be suppressed upon curing of the UV-ray curable composition filled in the cavity having a large thickness and with large difference in localized thickness, a resin layer having a large thickness, with large difference in the localized thickness can be formed.

The present invention provides, tenthly, the ninth method of manufacturing the hybrid lens as described above, wherein the method includes, after the curing step, an annealing step of applying such a pressure as bringing the glass lens base material and the glass mold approaching to each other while heating to a temperature higher than the glass transition point of the curing product of the UV-ray curable resin composition.

The aspherical shape of the glass mold can be transferred at a high accuracy while softening the resin layer by applying the pressure while heating to a temperature higher than the glass transition point of the cured resin after polymerization by UV-rays.

The present invention provides, eleventhly, the ninth method of manufacturing a hybrid lens as described

above, wherein the method includes, before the curing step, a preliminary curing step of irradiating UV-rays thereby gelling the UV-ray curable resin composition.

Since polymerization can be proceeded uniformly by applying preliminary cure of irradiating UV-rays to the UV-ray curable resin composition thereby gelling the same before substantially complete cure by the UV-ray irradiation, occurrence of polymerization strain can be further suppressed.

The present invention provides twelfthly, the seventh method of manufacturing a hybrid lens as described above, wherein the glass lens base material treated with a silane coupling agent is used.

Adhesion of the resin layer to the glass lens base material is sometimes not satisfactory by merely blending the silane coupling agent with the resin composition depending on the kind of the glass lens base material and, accordingly, it is desirable to previously treat the glass lens base material with the silane coupling agent.

The present invention provides, thirteenth, a hybrid lens wherein a resin layer formed of a resin composition for use in a hybrid lens containing a radical polymerizable monomer and a silane coupling agent is bonded to the surface of a glass lens base material.

By the use of the resin composition blended with the silane coupling agent, it is possible to manufacture a high performance hybrid lens having a resin layer of a large thickness, with a large localized thickness and capable of increasing the aspherical quantity.

The present invention provides, fourteenth, the 13th hybrid lens as described above wherein the maximum thickness of the resin layer is within a range from 1 to 10 mm.

By the use of the resin composition blended with the silane coupling agent, a resin layer of such a thickness can be formed.

The present invention provides, fifteenth, the 14th hybrid lens as described above, wherein the ratio of maximum thickness/minimum thickness within the effective diameter of the resin layer is 4 or more and 20 or less.

By the use of the resin composition blended with the silane coupling agent, it is possible to form a resin layer with such a large localized thickness.

The present invention provides, sixteenth, a lens system using a hybrid lens in which a resin layer formed of a resin composition for use in a hybrid lens containing a radical polymerizable monomer and a silane coupling agent is bonded to the surface of a glass lens base material.

By using a high performance hybrid lens having a resin layer of a large thickness, with a large localized thickness and capable of increasing the aspherical quantity by blending the silane coupling agent for a lens system, a high performance and compact projection lens can be constituted while saving the number of lenses required for aberration correction in a case of constituting, for example, a projection lens having an extremely wide angle.

The present invention provides, seventeenth, the 16th lens system as described above, wherein the maximum thickness of the resin layer of the hybrid lens is within a range from 1 to 10 mm.

By the use of a hybrid lens having a resin layer of a maximum thickness and capable of increasing the aspherical quantity, a high performance and compact optical system can be constituted while saving the number of lenses required for aberration correction.

## Industrial Applicability

The resin composition for use in the hybrid lens according to the present invention can be utilized for forming a resin layer of a hybrid lens formed by stacking a resin layer of an aspherical shape on a spherical glass lens.

Further, the method of manufacturing the hybrid lens according to the present invention can be utilized for the manufacture of a high performance hybrid lens having a resin layer of a large thickness, with a large localized thickness and capable of increasing the aspherical quantity.

Since the hybrid lens according to the present invention is a high performance aspherical lens having a resin layer of a large thickness, with a large localized thickness and capable of aspherical quantity, it can be utilized, for example, as a projection lens for a liquid crystal projector.

Since the optical system according to the present invention uses a high performance hybrid lens having a resin layer of a large thickness, with a large localized thickness and capable of increasing the aspherical quantity, it can be utilized, for example, as a projection lens for use in a liquid crystal projector.

## Brief Description of the Drawings

[Fig. 1] is a cross sectional view showing a preferred embodiment of a hybrid lens according to the present invention.
[Fig.2] (a) - (d) are a flow chart showing the steps for a method of manufacturing a hybrid lens according to the present invention.

[Fig. 3] (e) - (g) are a flow chart showing the steps for a method of manufacturing a hybrid lens according to the present invention.

[Fig. 4] is a cross sectional view showing the constitution of a projection lens as an example of an optical system according to the present invention.

[Fig. 5] is an aberration chart of the projection lens in Fig. 4.

Best Mode for Carrying Out the Invention

Preferred embodiments for a resin composition for use in a hybrid lens, a method of manufacturing a hybrid lens, a hybrid lens and a lens system according to the present invention are to be described but the invention is not restricted to the following embodiments.

The resin composition for use in the hybrid lens according to the present invention is used for forming a resin layer of a hybrid lens formed by stacking a resin layer of an aspherical shape on a spherical glass lens. The resin composition for use in the hybrid lens according to the present invention contains a radical polymerizable monomer and a silane coupling agent.

The radical polymerizable monomer is a main ingredient forming a resin layer of a hybrid lens by radical polymerization and curing. The radical polymerizable monomer in the present invention preferably contains, as the ingredient A, a di(meth)acrylate compound represented by the following general formula (I).

Ingredient A:

[Chemical formula 5]

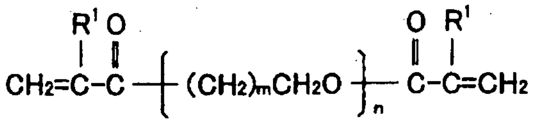 · · · (I)

(where $R^1$ represents hydrogen or a methyl group, m represents an integer of 2 to 5 and n represents an integer of 1 to 16)

The di(meth)acrylate compound represented by the general formula (I) as the ingredient A is a main ingredient of the resin composition for use in the hybrid lens according to the present invention and it has a function of softening the resin layer into a rubbery state, moderating the stress to the glass lens base material caused by the polymerization shrinkage and providing durability.

Specific examples of the di(meth)acrylate compound represented by the general formula (I) can include, for example, di(meth)acrylate compounds of polyethylene glycol such as ethylene glycol di(meth)acrylate, diethylene glycol di(meth)acrylate, triethylene glycol di(meth)acrylate, tetraethylene glycol di(meth)acrylate, pentaethylene glycol di(meth)acrylate, and nonaethylene glycol di(meth)acrylate; di(meth)acrylate compounds of polypropylene glycol such as propylene glycol di(meth)acrylate, dipropylene glycol di(meth)acrylate, tripropylene glycol di(meth)acrylate, tetrapropylene glycol di(meth)acrylate, and nonapropylene glycol di(meth)acrylate; di(meth)acrylate compounds of polybutylene glycol such as butylene glycol di(meth)acrylate, dibutylene glycol di(meth)acrylate, tributylene glycol di(meth)acrylate, tetrabutylene glycol di(meth)acrylate, nonabutylene glycol di(meth)acrylate, and dodecabutylene glycol di(meth)acrylate; and di(meth)acrylate compounds of caprolactone adduct of 1,3-butylene glycol di(meth)acrylate, 1,6-hexamethylene glycol di(meth)acrylate, 1,14-tetradecamethylene glycol di(meth)acrylate, neopentyl glycol di(meth)acrylate, and hydroxypivalic acid neopentyl glycol.

The content of the ingredient A in the resin composition for use in the hybrid lens according to the present invention is within a range preferably from 30 to 90 parts by weight, particularly, from 50 to 80 parts by weight. In a case where the content of the ingredient A is insufficient, no sufficient flexibility is obtained for the resin layer, the heat resistance coping with the change of the circumstance temperature is insufficient and the amount of water absorption can not sometimes be suppressed. On the other hand, in a case where the content is excessive, the surface hardness sometimes lowers remarkably.

Further, the radical polymerization monomer in the resin composition for use in a hybrid lens according to the present invention preferably contains, as the ingredient B, a mono(meth)acrylate compound represented by the following general formula (II).

[Chemical formula 6]

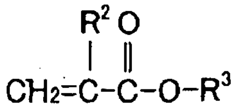

• • • (II)

(where $R^2$ represents hydrogen or a methyl group and $R^3$ represents a cycloaliphatic hydrocarbon group with a number of carbon atoms of from 5 to 16).

The mono(meth)acrylate compound represented by the general formula (II) as the ingredient B has a function of improving the surface accuracy of the polymerization cured resin layer necessary for the hybrid lens.

Specific examples of the mono(meth)acrylate compound can include, cyclopentyl(meth)acrylate, cyclohexyl(meth) acrylate, trimethylcylohexyl (meth) acrylate, norbornyl (meth) acrylate, isobornyl(meth)acrylate, adamantyl(meth)acrylate, dicyclopentyl(meth)acrylate, and tricycle (5, 2, $1,0^{2,6}$)decan-8-yl(meth)acrylate.

The content of the ingredient B in the resin composition for use in the hybrid lens according to the present invention is preferably within a range from 5 to 40 parts by weight, particularly, 10 to 30 parts by weight. In a case where the content of the ingredient B is insufficient, no sufficient surface accuracy can not sometimes be obtained and, on the other hand, in a case where the content is excessive, the heat resistance of the resin is sometimes deteriorated.

The radical polymerizable monomer in the resin composition for use in the hybrid lens according to the present invention preferably contains, as the ingredient C, a urethanepoly(meth)acrylate having two or more (meth) acryloyloxy groups in one molecule, or an epoxypoly(meth)acrylate having two or more (meth)acryloyloxy groups in one molecule. The ingredient C is an ingredient providing the resin layer with heat resistance and providing an appropriate hardness.

The urethanepoly(meth)acrylate having two or more (meth)acryloyloxy groups in one molecule as the ingredient C can include a urethanizing reaction product of a (meth)acrylate having a hydroxyl group and an isocyanate compound having two or more isocyanate groups in the molecule.

Specific examples of the polyisocyanate compound having a polyisocyanate group having at least two isocyanate groups in the molecule can include aliphatic, aromatic, or cycloaliphatic isocyanates, for example, tetramethylene diisocyanate, hexamethylene diisocyanate, 2,2,4-trimethylenehexamethylene diisocyanate, cyclohexane diisocyanate, isophorone diisocyanate, tolylene diisocyanate, xylylene diisocyanate, 1,3-bis($\alpha$,$\alpha$'-dimethylisocyanatemethyl) benzene, diphenylmethane diisocyanate, m-phenylene diisocyanate, dicyclohexylmethane diisocyanate, naphthalene diisocyanate, and biphenyl diisocyanate. Compounds having at least two isocyanate groups in the molecule obtained by the reaction between the isocyanates described above and a compound having at least two active hydrogen atoms such as of amino group, hydroxy group and carboxyl group, or trimers to pentamers of the isocyanate compounds described above can also be used.

Further, the epoxypoly(meth)acrylate having two or more (meth)acryloyloxy groups in one molecule can include a glycidyl group ring opening reaction product between an epoxy compound having two or more glycidyl groups in the molecule and (meth)acrylic acid or a compound having (meth)acryloyloxy group and a carboxyl group in the molecule.

The epoxy compound having at least two glycidyl groups in the molecule used for the ring-opening reaction can included, for example, fatty acid epoxy compounds such as 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, triethylene glycol diglycidyl ether, tetraethylene glycol diglycidyl ether, nonapropylene glycol diglycidyl ether, neopentyl glycol diglycidyl ether, diglycidyl ether of neopentyl glycol hydroxy pivalate, trimethylol propane diglycidyl ether, trimethylol propane triglycidyl ether, glycerol diglycidyl ether, glycerol triglycidyl ether, diglycerol triglycidyl ether, pentaerythritol diglycidyl ether, pentaerythritol tetraglycidyl ether, dipentaerythritol pentaglycidyl ether, dipentaerythritol hexaglycidyl ether, sorbitol tetraglycidyl ether, diglycidyl ether of tris(2-hydroxyethyl)isocyanurate, diglycidyl ether of tris(2-hydroxyethyl)isocyanurate, triglycidyl ether of tris(2-hydroxyethyl)isocyanurate, cycloaliphatic epoxy compounds such as diglycidyl ether of isophoronediol, diglycidyl ether of 1,4-bis(hydroxymethyl)cyclohexane; and diglycidyl ether of bis-2,2-hydroxycyclohexylpropane, and aromatic epoxy compound such as resorcine glycidyl ether, bisphenol A, bisphenol F, bisphenol A diglycidyl ether obtained by condensation of bisphenol S and epichlorohydrine, bisphenol F diglycidyl ether, bisphenol S diglycidyl ether, tetrabromo bisphenol A diglycidyl ether, bis(3,5-dimethyl-4-hydroxyphenyl)sulfone, bis(3-methyl-4-hydroxyphenyl)sulfone, condensation product of bis(3-phenyl-4-hydroxyphenyl) and epichlorohydrine, condensation product of 2,6-xylenol dimer and epichlorohydrine, diglycidyl ester of ortho-phthalic acid, phenol novolac polyglycidyl ether, and cresol novolac polyglycidyl ether.

The compound to be reacted with the epoxy compounds described above can include, for example, acrylic acid and methacrylic acid and, in addition, carboxyl group-containing (meth)acrylate obtained by reacting hydroxyethyl (meth)acrylate and an acid anhydride such as o-phthalic acid anhydride, and a carboxyl group-containing (meth)acrylate

obtained by reacting glycidyl(meth)acrylate and a compound having two or more carboxyl groups in the molecule such as adipic acid. The reaction between the epoxy compound and the carboxyl group-containing (meth)acrylate is conducted, for example, by mixing both of them, adding, a tertiary amino compound such as dimethylaminomethylmethacrylate or a quaternary amine salt such as benzyltrimethyl ammonium chloride as a catalyst, and heating at 60°C to 110°C.

The urethanepoly(meth)acrylate or the eopoxypoly (meth) acrylate can be used alone or as a mixture of two or more of them and in view of the colorless transparency and the heat resistance of a hybrid lens obtained by curing, an adduct of isophorone diisocyanate, 2,2,4-trimethylhexamethylene diisocyanate, dicyclohexylmethane diisocyanate, xylylene diisocyanate, 1,3-bis(α,α'-dimethylisocyanatemethyl)benzene, tolylene diisocyanate or naphthalene diisocyanate, and 2-hydroxypropyl(meth)acrylate as the urethanepoly(meth)acrylate, or a reaction product of 1,6-hexanediol diglycidyl ether, diethylene glycol diglycidyl ether, trimethylolpropane diglycidyl ether, trimethylolpropane triglycidyl ether, glycerol triglycidyl ether, triglycidyl of tris(2-hydroxyethyl)isocyanurate, 2,2-bis(4-glycidyloxycyclohexyl)propane, bisphenol A diglycidyl ether, bisphenol S diglycidyl ether or tetrabromo bisphenol A diglycidyl ether, and acrylic acid or methacrylic acid as the epoxypoly(meth)acrylate are used particularly preferably.

The content of the ingredient C in the resin composition for use in the hybrid lens according to the present invention is preferably within a range from 0 to 50 parts by weight, particularly, 5 to 50 parts by weight and most preferably, 10 to 30 parts by weight. It may not be contained in a case where not so high heat resistance is required for the hybrid lens. The content in the range described above is preferred for providing an appropriate heat resistance. In a case where the content is excessive, the resin layer hardens excessively and the glass lens base material may possibly be cracked, as well as the viscosity of the composition is increased to sometimes deteriorate the workabilitility in mold casting.

The silane coupling agent as the essential ingredient for the resin composition for use in the hybrid lens according to the present invention is an ingredient for providing adhesiveness between the glass lens base material and the resin layer. It is also an ingredient of improving the surface hardness of the resin layer to provide practical usefulness. That is, by the blending of the di(meth)acrylate compound as the ingredient A, the resin layer is softened, stress to the glass lens base material caused by the polymerization shrinkage is moderated, durability is provided and a high performance hybrid lens having a resin layer of a large thickness, with a large localized thickness and capable of increasing the aspherical quantity can be produced. On the other hand, it also has a function of compensating the drawback that the surface hardness lowers excessively to lack in the practical usefulness.

The silane coupling agent generally has a structure having an organic functional group having a substituent coupling with an organic material and a hydrolyzable group reacting with an inorganic material in one identical molecule. The organic functional group is a vinyl group, glycidoxy group, methacryl group, amino group or mercapto group and the hydrolyzable group mainly comprises chlorine and alkoxy group. Specific examples of the silane coupling agent can include, for example, vinyltrichloro silane, vinyltriethoxy silane, vinyltris(β-methoxyethoxy)silane, γ-glycidoxypropyltrimethoxy silane, γ-glycidoxypropyldimethoxy silane, γ-methacyloxypropyltrimethoxy silane, N-β(aminoethyl)γ-aminopropyltrimethoxy silane, N-β(aminoethyl)γ-aminopropyldimethoxy silane, γ-chloropropyltrimethoxy silane, γ-mercaptopropyltrimethoxy silane, and γ-aminopropyltriethoxy silane.

The content of the silane coupling agent in the composition for use in the hybrid lens according to the present invention is preferably within a range from 1 to 10 parts by weight and, particularly, 3 to 5 parts by weight. In a case where the content is insufficient, the effect is not sometimes developed and, on the other hand, in a case where the content is excessive, self crosslinking develops to increase the viscosity of the monomer solution to sometimes extremely lower the injection operability to the cavity.

The polymerization initiator used upon curing the resin composition for use in the hybrid lens according to the present invention can include, for example, a photopolymerization initiator such as 2-hydroxy-2-methyl-1-phenylpropane-1-one, methylphenylglyoxylate, 2,4,6-trimethylbenzoyl diphenylphosphine oxide, and bis(2,4,6-trimethylbenzoyl)-phenylphosphine oxide, organic peroxides such as benzoyl peroxide, t-butylperoxy isobutylate, and t-butylperoxy-2-ethylhexanoate, and azocompound such as 2,2'-azobisbutyronitrile and 2,2'-azobis(2,4-dimethylvaleronitrile). Use of the photopolymerization initiator, among the polymerization initiators, to prepare UV-ray curable resin composition is more preferred since the curing rate is high and room temperature curing is possible. The polymerization initiators may be used alone or as a mixing system of two or more of them and a cocatalyst and a sensitizer may be added for increasing the curing rate. The blending ratio of the polymerization initiator is usually from 0.005 to 5 parts by weight based on 100 parts by weight in total of the monomer ingredients.

The resin composition for use in the hybrid lens according to the present invention may be blended, optionally, with additives such as antioxidant, anti yellowing agent, UV-absorbent, dye and pigment within a range not deteriorating the effect of the invention.

The resin composition for use in the hybrid lens according to the present invention can be prepared by mixing and stirring the radical polymerizable monomer ingredients and the silane coupling agent by a customary method and further blending, optionally, various kinds of additives.

The resin composition for use in the hybrid lens according to the present invention, being incorporated with the silane coupling agent, can improve the adhesion between the glass lens base material and the resin layer, as well as

can improve the surface hardness of the resin layer which may result in a trouble when the resin layer is softened by using, as the main ingredient, the di(meth)acrylate compound represented by the general formula (I) as the ingredient A for moderating the stress to the glass lens base material caused by the polymerization shrinkage of the resin composition for use in the hybrid lens to provide practical usefulness. In addition, it can enhance the transfer accuracy of the aspherical surface by the incorporation of the mono(meth)acrylate compound represented by the general formula (II) as the ingredient B. Accordingly, it is possible to manufacture a high performance hybrid lens having a resin layer of a large thickness, with a large localized thickness and capable of increasing the aspherical quantity.

Specifically, a hybrid lens according to the present invention as shown in Fig. 1 can be manufactured. The hybrid lens 1 has a structure in which a resin layer 3 having an aspheric outer surface shape is bonded to one or both of surfaces of a spherical glass lens base material 2. The spherical glass lens base material 2 may be either a convex lens or concave lens. The maximum thickness $T_{max}$ of the resin layer 3 within the range of the effective diameter of the lens is within a range from 1 mm to 10 mm and, preferably, 2 to 8 mm and the resin layer 3 of a larger thickness compared with existent hybrid lenses is provided. The thickness of the resin layer 3 means the thickness in the direction of a normal line to the glass lens base material 2. In a case where the maximum thickness $T_{max}$ of the resin layer 3 is excessively thin, the performance as the aspherical lens is not sufficient and, in a case where the maximum thickness $T_{max}$ of the resin layer 3 is excessively large, adhesion relative to the glass lens base material is insufficient due the difference of the heat expansion coefficient between glass and resin to cause peeling.

Further, the ratio of the minimum thickness $T_{min}$/maximum thickness $T_{max}$ of the resin layer 3 is 1/4 or less within the range of the effective diameter of the lens, that is, in a case where it is defined as: amount of localized thickness = $T_{max}/T_{min}$, the amount of localized thickness is preferably 4 or more and, particularly, 5 or more with the upper limit value being 20. In a case where the amount of localized thickness is excessively small, the aspherical quantity of the resin layer 3 is decreased and the degree of improvement of the optical performance as the aspherical lens is reduced. On the other hand, in a case where the quantity of the localized thickness exceeds 20, manufacture becomes difficult since the lens shape is complicated.

In the hybrid lens 1 of the present invention, not only the thickness of the resin layer 3 is larger than that of the existent case but also a larger diameter of about 60 to 150 mm can be obtained. In the existent hybrid lenses, those of a large diameter of 60 mm or more were not present.

Since the hybrid lens 1 according to the present invention has a resin layer of a large thickness and can increase the aspherical quantity, it has excellent aberration correcting performance and the diameter can be increased. Since higher aberration correcting performance can be obtained compared with the existent hybrid lens, the number of constituent lenses can be decreased further and an optical system small in the size and reduced in the weight can be obtained. Accordingly, referring to the application uses, it can be used, for example, as projection lens for use in liquid crystal projectors, particularly, as the lens nearest to the object thereof, lens for use in video cameras or still cameras, and light-pickup lens for use in copiers, laser printers, telescopes, binocular telescopes, microscopes, CD or DVD.

Then, a method of manufacturing a hybrid lens according to the present invention suitable to manufacture of a high performance hybrid lens having a resin layer of a large thickness, with a large localized thickness and capable of increasing the aspherical quantity as shown in Fig. 1 is to be described with reference to Fig. 2 and Fig. 3. In the method of manufacturing the hybrid lens according to the present invention, the resin composition for use in the hybrid lens of the present invention described above is used preferably. By the combination of the resin composition for use in the hybrid lens of the present invention and the method of manufacturing the hybrid lens of the present invention, a high performance hybrid lens having a resin layer of a large thickness, with a large localized thickness and capable of increasing the aspherical quantity can be manufactured easily. However, other resin compositions may also be used in the method of manufacturing the hybrid lens of the present invention.

The method of manufacturing.the hybrid lens according to the present invention comprises (a) treating step for a molding die, (b) molding die assembling step, (c) injection step, (d) preliminary curing step, (e) curing step, (f) annealing step and (g) mold releasing step.

At first, the treating step for the molding die (a) is a step of selecting a glass lens base material 2 and a glass mold 4 necessary for molding a hybrid lens and conducting a necessary pretreatment as shown in Fig. 2(a).

The glass lens base material 2 is a lens mirror polished at both surfaces into a spherical shape easy to be polished which may be a convex lens or a concave lens. A surface to be formed with a resin layer is defined as a molding surface 21. The glass lens base material 2 shown in Fig. 1 and Fig. 2(a) shows a lens used as a concave lens situated nearest to the object of projection lenses for use in a liquid crystal projector. Accordingly, the molding surface 21 is formed for the entire convex surface of the glass lens base material 2, and the spherical concave surface opposed to the molding surface 21 is smaller than the molding surface 21 and has a larger curvature. Further, the outer periphery for the concave surface is formed as a planar surface perpendicular to the optical axis. The material for the glass is decided considering the refractive index and the dispersibility. The glass mold 4 on one side has a transfer surface 41 for transferring the aspherical shape and an outer surface 42 opposed to the transfer surface 41 in which the transfer surface 41 is mirror-polished. The glass mold 4 shown in Fig. 2 (a) has a planar outer surface 42 opposing to the transfer

surface 41. The outer diameter is substantially equal between the glass lens base material 2 and the glass mold 4 and both of them have a circular circumferential lateral surface. The outer diameter for each of the glass lens base material 2 and the glass mold 4 is within a range of about 30 to 150 mm.

The molding surface 21 of the glass lens base material 2 to be formed with the resin layer is cleaned and the molding surface 21 is coated with a liquid containing a silane coupling agent, for example, as described above with an aim of improving the adhesiveness with the resin layer 3, dried and then baked. Coating of the silane coupling agent may not be necessary depending on the case when the silane coupling agent is blended in the resin composition for use in the hybrid lens, but necessary close adhesion can not sometimes be obtained unless the silane coupling agent is incorporated with the resin composition for use in the hybrid lens together with the silane coupling treatment of the glass lens base material depending on the material of the glass. Preferably, the transfer surface 41 of the glass mold 4 is cleaned and previously coated with a mold releasing agent. By coating the mold releasing agent to the transfer surface 41, the glass mold 4 can be released easily from the resin layer after the molding.

Then, as shown in Fig. 2(b), the mold assembling step (b) is conducted. The glass mold 4 is held horizontally with the transfer surface 41 of the glass mold 4 being situated above, and the molding surface 21 of the glass lens base material 2 is situated below and held being opposed to the transfer surface 41 of the glass mold 4 while being spaced apart by a predetermined distance. Then, an adhesive tape 5 is wound around over the lateral surfaces of the glass lens base material 2 and the glass mold 4 by an extra length exceeding one turn to form an overlap region of the adhesive tape 5. By the winding of the adhesive tape 5, the glass lens base material 2 and the glass mold 4 are fixed to each other and a gap between the molding surface 21 of the glass lens base material 2 and the transfer surface 41 of the glass mold 4 is sealed. This defines a cavity 6 confined with the molding surface 21, the transfer surface 41 and the adhesive tape 5 and, thus, the hybrid lens molding die 7 can be assembled.

In the cavity 6, the maximum thickness is within a range from 1 mm to 10 mm, preferably, 2 to 8 mm and the minimum thickness is about 1/4 or less, preferably, from 1/5 to 1/20 of the maximum thickness for the gap between the molding surface 21 of the glass lens base material 2 and the transfer surface 41 of the glass mold 4 in the direction of the normal line to the molding surface 21 of the glass lens base material 2 within the range of the effective diameter of the lens.

The adhesive tape 5 has a structure in which an adhesive layer is formed to a tape substrate. The material for the tape substrate can include, for example, polyolefins, such as polyethylene and polypropylene, polyvinyl halide such as polyvinyl chloride and polyvinylidene chloride, polyesters such as polyethylene terephthalate, polybutylene terephthalate, and polyethylene naphthalate, polyamides, polyimides, and polycarbonates. As adhesives, those of acrylic, rubber type, or silicone type may be used. Adhesives not leaching into the UV-ray curable resin composition or not hindering polymerization are selected.

The thickness of the tape substrate material is 10 $\mu$m or more, preferably, 20 $\mu$m or more and, optimally, 30 $\mu$m or more since it is required that the glass mold 4 and the glass lens base material 2 can be fixed at a good accuracy in the mold assembling step. The maximum thickness is about 2000 $\mu$m.

It may suffice for the width of the adhesive tape 5 that it can hold the lateral surface for the glass lens base material 2 and the glass mold 4 and can seal the gap between them and it may be a large width as extending therefrom.

An adhesive tape sealing method of assembling a hybrid lens molding die 7 by opposing the glass lens base material 2 and the glass mold 4 and adhering the adhesive tape 5 for the lateral surfaces thereof thereby sealing the gap between the glass lens base material 2 and the glass mold 4 can form a cavity of a large thickness more easily and conveniently than the existent method of holding the glass lens base material 2 and the glass mold 4 by using a sleeve or a mold frame.

Then, as shown in Fig. 2(c), the injection step (c) is conducted. An overlap portion between adhesive tapes 5 is peeled to form a small opening to the cavity 6, and a UV-ray curable resin composition 9 previously prepared in the monomer preparing step is injected from the opening into the cavity 6 by way of a fine injection tube 8 such as an injection needle, then the adhesive tapes 5 at the peeled portion are adhered again to seal the cavity 6.

Then, as shown in Fig. 2(d), the preliminary curing step (d) is conducted. Since the polymerization can be made uniform to suppress the occurrence of the polymerization strain by preliminary irradiation of UV-rays, this is effective for forming a thick resin layer. For preliminary irradiation, UV-rays $UV_1$ are irradiated by using a UV-ray irradiation source, for example, a high pressure mercury lamp or a metal halide lamp. It is conducted for an irradiation time of 2 to 20 sec, at a room temperature without heating, with a UV-ray intensity of about 100 to 140 W and at an irradiation dose of about 0.05 to 30 J/cm$^2$. By the preliminary irradiation, the UV-ray curable resin composition 9 is gelled. The preliminary irradiation can be conducted, as shown in Fig. 2(d), by irradiating UV-rays through the glass mold 4, or irradiating UV-rays through the glass lens base material 2, or they may be irradiated from both sides. Depending on the case, the preliminary curing step is not always necessary but it may be saved.

Then, as shown in Fig. 3(e), the curing step (e) is conducted. In the present invention, a glass mold 4 is used and UV-rays are irradiated to a UV-ray curable resin composition 9 in the cavity 6 from both sides through the molding dies 2 and 4 on both surfaces. UV-ray irradiation sources such as high pressure mercury lamps or metal halide lamps

are located on both sides of the molding dies 2 and 4, or a reflection mirror is used to irradiate UV-rays to the UV-ray curable resin composition 9 in the internal cavity 6 through both of the glass mold 4 and the glass lens base material 2, to cure the UV-ray curable resin composition 9 substantially completely.

The UV-ray irradiation may be conducted for a time of 50 to 300 sec and at a room temperature as a circumstantial temperature, or it may be conducted at a heated atmosphere up to 120°C. The irradiation intensity of UV-rays is about 50 to 150 mW for UV-rays $UV_2$ on the side of the glass mold 4 and 50 to 150 mW for the UV-rays $UV_3$ on the side of the glass lens base material 2, and it is preferred that the irradiation intensities on both sides are substantially equal with each other. The irradiation dose of the UV-rays is about 1 to 500 J/cm$^2$ with no particular restriction. Further, UV-rays may be irradiated alternately from both sides.

Heretofore, a thick resin layer could not be formed on the glass lens base material, and it may be attributable to that when the thickness of the resin layer increases and the difference of the localized thickness between thin portions and thick portions of the resin layer increases, a polymerization rate becomes different between the thick and thin portions of the resin layer upon UV-ray polymerization, so that polymerization strain occurs in the resin layer, and the polymerization strain tends to induce peeling or cracking in the resin layer, and also causes optical double refraction to deteriorate the optical performance of the resin layer.

Accordingly, in order to irradiate UV-rays as uniform as possible for the thick and thin portions upon UV-ray polymerization, the molding die paired with the glass lens base material 2 for transferring the aspherical shape is formed of the glass mold 4 and UV-rays are irradiated from both sides through the glass mold 4 and the glass lens base material 2, by which UV-rays can be irradiated sufficiently as far as the center of the UV-ray curable resin composition 9 filled in the cavity 6. As a result, the polymerization rate can be made uniform between the thick and thin portions of the cavity 6 to suppress the occurrence of the polymerization strain as less as possible. Since the occurrence of the polymerization strain can be suppressed, occurrence of peeling, cracking, etc. to the resin layer can be suppressed and optical strain can also be suppressed. Thus, a thick resin layer can be formed on the glass lens base material 2.

Further, since the adhesive tape 5 is thin, adhered to the lateral surfaces of the glass mold 4 and the glass lens base material 2 and can be made light permeable, it does not hinder the irradiation of UV-rays from both sides, and UV-rays can be irradiated sufficiently as far as the peripheral portion of the cavity 6. Accordingly, this can contribute to unify the polymerization rate over the entire cavity 6 and suppress occurrence of polymerization strain even for the resin layer 3 of a shape in which the central portion is thin and the peripheral portion is thick as shown in Fig. 1.

Then as shown in Fig. 3(f), the annealing step (f) is conducted. The annealing step has an aim of removing the polymerization strain and improving the transfer accuracy. A pressure is applied so as to bring the glass mold 4 and the glass lens base material 2 closer to each other in a temperature atmosphere higher than the glass transition point of the curing product (resin layer) 3 of the UV-ray curable resin composition, preferably, in a temperature atmosphere higher by 10°C than the glass transition point. Thus, the glass mold 4 is press bonded under softening to the curing product 3 and the transfer accuracy is improved by pressing the shape of the transfer surface 41 of the glass mold 4 sufficiently to the curing product. Simultaneously, the polymerization strain can be removed by annealing.

In the annealing treatment, a hybrid lens molding die 7 is located, for example, in an autoclave with the glass lens base material 2 being situated below and the glass mold 4 being situated above, and treated in the temperature atmosphere described above for about 30 min to 2 hours under the application of a pressure of about $3 \times 10^{-3}$ to $10 \times 10^{-3}$ atm. It is of course possible to conduct pressurization while applying a pressure so as to physically approach the glass mold 4 and the glass lens base material 2 to each other. Further, a heat treatment may be merely applied in the heating furnace without pressing. The annealing step is not always necessary. Further, annealing only by heating may be conducted after releasing the glass mold 4.

Then as shown in Fig. 3(g), the releasing step (g) is conducted. By peeling the adhesive step 5 and providing an impact shock to the glass mold 4, the glass mold 4 is released from the resin layer 3 to obtain a hybrid lens 1 in which the resin layer 3 is bonded on the glass lens base material 2. The hybrid lens 1 has a structural feature in that the end edge of the lens layer 3 and the end edge of the glass lens base material 2 are aligned by adopting the adhesive tape sealing method. The annealing step (f) and the mold releasing step (g) may optionally be replaced to each other in view of the steps.

For the thus obtained hybrid lens 1, a hard coating treatment and/or anti-reflection coating treatment may be applied for providing the resin layer 3 with a scratch resistance and an anti-reflection coating treatment may be applied to the glass lens base material 2 as required.

Abbreviated expressions for the compounds used in the following examples are as shown below.

Ingredient A:

9BGDM: nonabutylene glycol dimethacrylate
12BGDM: dodecabutylene glycol dimethacrylate
9EGDM: nonaethylene glycol dimethacrylate

Ingredient B:

TCDM: tricyclo(5,2,1,$0^{2,6}$)decan-8-yl methacrylate
CHM : cyclohexyl methacrylate

Ingredient C:

UDM1: urethane dimethacrylate obtained by reacting isophorone diisocyanate and 2-hydroxypropyl methacrylate
UDA2: urethane diacryalte obtained by reacting tolylene diisocyanate and 2-hydroxyethyl acrylate
EDM1: epoxy dimethacrylate obtained by reacting bisphenol A diglycidyl ether and methacrylic acid
Silane coupling agent:

MTS: γ-methacryloxypropyl trimethoxy silane
MDS: γ-methacryloxypropyl dimethoxy silane

< Example 1 >

After mixing 65 parts by weight of 9BGDM (manufactured by Mitsubishi Rayon Co.: trade name of products, ICURE M-70), 12 parts by weight of TCDM (manufactured by Hitachi Kasei Kogyo Co.: trade name of products, FA-513MS), 20 parts by weight of UDA2 (manufactured by Mitsubishi Rayon Co.: trade name of products, DIABEAM U-12), 3 parts by weight of MTS (manufactured by GE Toshiba Silicone Co.: trade name of products, ORGANOSILANE TSL-8730), 300 ppm of bis(2,4,6-trimethylbenzoyl)-phenyl phosphine oxide (manufactured by Chiba Specialty Chemicals Co.: trade name of products, IRGACURE 819), and 1000 ppm of t-butylperoxy isobutylate (manufactured by Nippon Yushi Co.; trade name of products, PERBUTYL IB), and thoroughly stirring them at a room temperature, they were deaerated for 15 min by reducing the pressure to 50 mmHg to obtain a resin composition for use in the hybrid lens.
A glass lens base material of 100 mm outer diameter with a curvature of 120 mm (manufactured by K.K. Ohara: species of glass material, S-LAM 54, refractive index nd = 1.76), mirror finished and applied with silane coupling agent treatment (coated with 10% MTS ethanol solution and baked at 120°C for about 30 min) and a glass mold of 100 mm outer diameter mirror finished to an aspherical shape were combined such that the thickness at the center was 0.5 mm and the maximum resin layer thickness was 5 mm by using an adhesive tape to assemble a hybrid lens molding die. The resin composition for use in the hybrid lens described above was injected into the hybrid lens molding die.
Then, the hybrid lens molding die injected with the resin composition for use in the hybrid lens was placed in an UV irradiation apparatus adjusted so as to irradiate by UV lamps at an irradiation intensity of 100 W from both sides of the hybrid lens molding die, and irradiated with UV-rays at 6000 mJ/$cm^2$ to cure-mold the resin layer. Then, the glass mold was released and an annealing treatment was applied by heating at 135°C for one hour. Then, an $SiO_2/ZrO_2$ series anti-reflection coating was vapor deposited on the resin surface. The hybrid lenses manufactured as described above were evaluated by the following evaluation method and shown in Table 1.

Appearance: The resin layer and the anti-reflection coating were observed visually as to whether cracking, corrosion, bubbling, peeling and remarkable color change were observed or not.
Surface accuracy: The surface shape of the resin layer of the hybrid lens was measured by using a three dimensional shape measuring instrument UA3P manufactured by Matsushita Electric Industry Co. For the surface accuracy, they were indicated as ○ for those of 3 μm or less, as Δ for those' of 3 μm to 10 μm and X for those of 10 μm or more.
Solvent resistance: The surface of the anti-reflection coating was rubbed with a lens cleaning paper soaked with an alcoholic organic solvent (manufactured by Ozu Shigyo Co.: trade name of products, DUSPER) for ten times and appearance was visually observed. Those with no change were evaluated satisfactory.
Transferability: The transferability on the lens surface after releasing the glass mold was visually judged.

○ : good transferability
Δ: some problem in transferability
X : poor transferability

Injection workability: Easiness or difficulty upon injecting the resin composition for use in the hybrid lens to the hybrid lens molding die were judged.

○ : easy to inject
Δ : somewhat difficult to inject

X : difficult to inject

Preparation of test specimen: A resin composition prepared in the same manner as in the resin composition shown in the example was molded into a disk-like plate of 2 mm or 5 mm thickness and 75 mm outer diameter, which was cut to a necessary size for measurement to prepare a specimen and the following measurement was conducted.
Refractive index: Refractive index of the test specimen prepared as described above at 25°C was measured by using an Abbe's refractometer.
Hardness: Pencil hardness was measured.
Temperature cycle test: The obtained hybrid lens was placed in a small-sized environmental tester (Model SH-220, manufactured by TABAIESPEKKU Co.) and subjected to 10 cycles of repetitive operations, one cycle comprising leaving at a low temperature of -30°C for 2 hours and then leaving at a high temperature of 80°C for 2 hours.

After conducting the endurance test, evaluation was made for the items shown below. Table 1 shows the result of evaluation.

Appearance: The resin layer and the anti-reflection coating were observed visually as to whether cracking, corrosion, bubbling, peeling and remarkable color change were observed or not. Those with no change were evaluated as satisfactory.
Solvent resistance: The surface of the anti-reflection coating was rubbed with a lens cleaning paper soaked with an alcoholic organic solvent (manufactured by Ozu Shigyo Co.: trade name of products, DUSPER) for ten times and appearance was visually observed. Those with no change were evaluated favorable.
Adhesion: An operation of adhering an adhesion tape (manufactured by Nichiban Co.: trade name of products, CELLOTAPE CT-12) on the surface of an anti-reflection coating and then peeling was repeated for three times and the appearance was visually observed. Those with no changes were evaluated as favorable.

< Examples 2 to 5 >

Lenses were manufactured in the same manner as in Example 1 excepting for the use of the monomer and the silane coupling agent in the ratios shown in Table 1, change of the species of the glass material for the glass lens base material, and with or without application of the primer treatment and they were evaluated. The results are shown together in Table 1.

( Examples 6 to 10 )

Lenses were manufactured in the same manner as in Example 1 excepting for the use of the monomer and the silane coupling agent in the ratios shown in Table 2, change of the species of the glass material for the glass lens base material, and with or without application of the primer treatment and they were evaluated. The results are shown together in Table 2.

(Comparative Examples 1 to 6)

Lenses were manufactured in the same manner as in Example 1 excepting for the use of the monomer and the silane coupling agent in the ratios shown in Table 3, change of the species of the glass material for the glass lens base material, and with or without application of the primer treatment and they were evaluated. The results are shown together in Table 3.

[Table 1]

| | | Example 1 | Example 2 | Example 3 | Example 4 | Example 5 |
|---|---|---|---|---|---|---|
| Composition (parts by weight) | A:9BGDM | 65 | | | 55 | 70 |
| | A:12BGDM | | | 45 | | |
| | A.9EDGM | | 65 | | | |
| | B:TCDM | 12 | 34 | 20 | | 15 |
| | B:CHM | | | | 17 | |

Table continued

| | | Example 1 | Example 2 | Example 3 | Example 4 | Example 5 |
|---|---|---|---|---|---|---|
| | C:UDM1 | | | | 25 | |
| | C:UDA2 | 20 | | | | 10 |
| | C:EDM1 | | | 32 | | |
| | D:MTS | 3 | 1 | 3 | | 5 |
| | D:MDS | | | | 3 | |
| Primer treatment for glass lens base material | | Applied | Applied | Applied | None | None |
| Refractive index of glass lens base material | | 1.76 | 1.76 | 1.51 | 1.51 | 1.76 |
| | Appearance | Good | Good | Good | Good | Good |
| | Refractive index | 1.51 | 1.49 | 1.53 | 1.50 | 1.52 |
| | Surface accuracy | O | O | O | O | O |
| | Solvent resistance | O | O | O | O | O |
| | Transferability | O | O | O | O | O |
| | Injection workability | O | O | O | O | O - Δ |
| | Hardness | H | HB | H | H | 2H |
| After temperature cycle test | Appearance | Good | Good | Good | Good | Good |
| | Solvent resistance | Good | Good | Good | Good | Good |
| | Adhesion | Good | Good | Good | Good | Good |
| After storage at high | Appearance | Good | Good | Good | Good | Good |
| temperature and high humidity | Adhesion | Good | Good | Good | Good | Good |

[Table 2]

| | | Example 6 | Example 7 | Example 8 | Example 9 | Example 10 |
|---|---|---|---|---|---|---|
| Composition (parts by weight) | A:9BGDM | | | 35 | | |
| | A:12BGDM | 35 | | | 65 | 70 |
| | A.9EDGM | | 73 | 25 | | 65 |
| | B:TCDM | | 15 | | 20 | 33 |
| | B:CHM | 27 | | 25 | | |
| | C:UDM1 | 35 | 10 | | | |
| | C:UDA2 | | | | | |
| | C:EDM1 | | | 10 | 32 | |
| | D:MTS | 3 | 2 | 5 | | |
| | D:MDS | | | | 3 | 3 |
| Primer treatment for glass lens base material | | Applied | Applied | None | Applied | Applied |
| Refractive index of glass lens base material | | 1.76 | 1.76 | 1.76 | 1.51 | 1.51 |
| | Appearance | Good | Good | Good | Good | Good |

Table continued

| | | Example 6 | Example 7 | Example 8 | Example 9 | Example 10 |
|---|---|---|---|---|---|---|
| | Refractive index | 1.49 | 1.55 | 1.51 | 1.50 | 1.52 |
| | Surface accuracy | O | O | O | O | O |
| | Solvent resistance | O | O | O | O | O |
| | Transferability | O | O | O | O | O |
| | Injection workability | O | O | O-Δ | O | O |
| | Hardness | 2H | H | 2H | H | H |
| After temperature cycle test | Appearance | Good | Good | Good | Good | Good |
| | Solvent resistance | Good | Good | Good | Good | Good |
| | Adhesion | Good | Good | Good | Good | Good |
| After storage at high temperature and high humidity | Appearance | Good | Good | Good | Good | Good |
| | Adhesion | Good | Good | Good | Good | Good |

[Table 3]

| | | Comp. Exam. 1 | Comp. Exam. 2 | Comp. Exam. 3 | Comp. Exam. 4 | Comp. Exam.5 | Comp. Exam. 6 |
|---|---|---|---|---|---|---|---|
| Composition (parts by weight) | A:9BGDM | | 35 | 60 | 65 | 70 | 35 |
| | A:12BGDM | | | | | | |
| | A.9EDGM | 61 | 25 | | | | 23 |
| | B:TCDM | 34 | | | 15 | 20 | |
| | B:CHM | | | 23 | | | 15 |
| | C:UDM1 | | | 15 | | 10 | |
| | C:UDA2 | | | | 20 | | |
| | C:EDM1 | | 37 | | | | 10 |
| | D:MTS | 5 | 3 | | | | 12 |
| | D:MDS | | | 2 | | | |
| Primer treatment for glass lens base material | | None | None | None | Applied | Applied | None |
| Refractive index of glass lens base material | | 1.76 | 1.76 | 1.76 | 1.76 | 1.76 | 1.76 |
| | Appearance | Good | Good | Good | Good | Good | Good |
| | Refractive index | 1.52 | 1.49 | 1.56 | 1.49 | 1.55 | 1.51 |
| | Surface accuracy | O | O | O | O | Δ | O |
| | Solvent resistance | O | O | O | O | O | O |
| | Transferability | O | O | O | O | O | O |

Table continued

| | | Comp. Exam. 1 | Comp. Exam. 2 | Comp. Exam. 3 | Comp. Exam. 4 | Comp. Exam.5 | Comp. Exam. 6 |
|---|---|---|---|---|---|---|---|
| | Injection workability | O-Δ | O | O | o | O | × |
| | Hardness | 2H | H | HB | 2B | 2B | 2H |
| After temperature cycle test | Appearance | Good | Good | Good | Good | Good | Poor |
| | Solvent resistance | Poor | Poor | Good | Good | Poor | Poor |
| | Adhesion | Good | Good | Good | Poor | Poor | Good |
| After storage at high temperature and high humidity | Appearance | Good | Good | Good | Good | Good | Poor |
| | Adhesion | Poor | Poor | Poor | Poor | Poor | Good |

The hybrid lenses obtained by using the resin composition for use in the hybrid lens according to the present invention in which the silane coupling agent is blended with the radical polymerizable monomer and by way of the manufacturing method for the hybrid lens according to the present invention are favorable in view of appearance, surface accuracy, transferability and adhesion with the glass lens base material, and changes are not observed even after the temperature cycle test or the high temperature high humidity storage. Further, they also have a hardness of HB or higher which are practically sufficient.

However, as shown in Comparative Examples 1 to 3, adhesion between the glass lens base material and the resin layer are sometimes insufficient unless the glass lens base material is treated with the silane coupling agent depending on the kind of the glass lens base material.

Further, as shown in Comparative Examples 4 and 5, since the hybrid lenses obtained by using the resin composition for use in the hybrid lens not blended with the silane coupling agent comprises the ingredient A as the main ingredient, the hardness is 2B and hardness is sufficient. Further, adhesion between the glass lens base material and the resin layer is insufficient even when the glass lens base material is treated with the silane coupling agent.

(Example 11)

Fig. 4 shows a cross sectional view of a lens system using the hybrid lens 1 of the present invention shown in Fig. 1 for projection lenses 100 for use in a liquid crystal projector. Reference Ri (i is an integer of 1 or larger) represents a lens surface number from the magnification side to the contraction side respectively and reference di (i is an integer of 1 or larger) represents the central thickness of a lens and an air gap between the lenses (mm) along the main optical axis from the magnification side to the contraction side successively. G1 represents a first lens group and G2 represents a second lens group. A color composition means 110 such as a dichroic prism composites three colors passing through three display units such as liquid crystal display units and it is shown as a block.

Table 4 shows the design data for the lens system of Fig. 4. Table 4 shows the radius of curvature R (mm) for each lens surface Ri, the central thickness for each lens, and the air gap di (mm) between each of the lenses in the cross sectional view of the lens shown in Fig. 4, and the refractive index Nd and the Abbe number Vd of the $i_{th}$ optical material to the d line from the magnification side to the contraction side respectively. Further, Table 4 shows, in the lower column thereof, k, $A_4$, $A_6$, $A_8$, $A_{10}$ for the aspherical coefficient in the following aspherical formula:

[Formula 1]

$$z = \frac{cr^2}{1+\sqrt{1-(1+k)c^2r^2}} + A_4r^4 + A_6r^6 + A_8r^8 + A_{10}r^{10}$$

in which z represents the coordinate value on the curved surface, γ represents a distance from the optical axis in the

direction crossing the optical axis, c represents a curvature at the vertex of the lens and k, $A_4$, $A_6$, $A_8$, and $A_{10}$ each represents an aspherical coefficient.

Further, Fig. 5 shows an aberration graph of the projection lens shown in Fig. 4. In the spherical surface aberration graph of the aberration graph, aberrations to c line, d line and g line are shown. In the astigmatism graph, aberration to the sagittal (S) image surface and the tangential (T) image surface are shown. $\omega$ in the aberration chart shows a half field angle.

[Table 4]

| Surface No. | Radius of curvature R | Distance d | Nd | Vd | |
|---|---|---|---|---|---|
| 1 | -80.86 | 0.5 | 1.54860 | 44.3 | L1, L2 Combined lens |
| 2 | 120 | 2.5 | 1.77250 | 49.6 | |
| 3 | 44.996 | 22.1 | | | |
| 4 | -279.47 | 3.2 | 1.77250 | 49.6 | L3 |
| 5 | 52.51 | 53.6 | | | |
| 6 | 70.03 | 1.0 | 1.80400 | 46.6 | L4 |
| 7 | 12.13 | 0.1 | | | |
| 8 | 12.64 | 3.5 | 1.76182 | 26.6 | L5 |
| 9 | -235.77 | 1.6 | | | |
| 10 | ∞ | 10.7 | | | Diaphragm |
| 11 | 117.04 | 5.0 | 1.49700 | 81.6 | L6 |
| 12 | -16.625 | 0.1 | | | |
| 13 | -21.01 | 4.4 | 1.72047 | 34.7 | L7,L8 |
| 14 | 17.892 | 7.5 | 1.49700 | 81.6 | Combined lens |
| 15 | -52.23 | 0.1 | | | |
| 16 | 154.69 | 7.9 | 1.49700 | 81.6 | L9, L10 Combined lens |
| 17 | -19.785 | 1.7 | 1.72047 | 34.7 | |
| 18 | -36.25 | 0.1 | | | |
| 19 | 389.78 | 8.5 | 1.48749 | 70.1 | L11 Aspheric lens |
| 20 | -21.14 | 6.6 | | | |
| 21 | ∞ | 37.0 | 1.151633 | 64.1 | Prism |
| 22 | ∞ | | | | |

Aspherical data

| Surface No. | K | $A_4$ | $A_6$ | $A_8$ | $A_{10}$ |
|---|---|---|---|---|---|
| 1 | -13.2299 | 9.0658E-06 | -7.8959E-09 | 4.6057E-12 | -1.4352E-15 |
| 20 | -1.6613 | -9.2184E-07 | -1.5153E-08 | 3.6094E-12 | -6.4012E-14 |

The first lens L1 and the second lens L2 constituting the first lens group G1 of the projection lens 100 constitute a hybrid lens in which the first surface of the first lens L1 facing the magnification side is an aspherical surface with an aspherical quantity of 0.5 mm or more. The resin layer in the hybrid lens has a central thickness of about 0.5 mm and a maximum resin layer thickness of about 5 mm. A diaphragm R10 is situated between the second lens L5 and the third lens L6 constituting the second lens group G2.

The designed specification values comprises a field angle 2$\omega$ of 121°, a focal distance of 6.82 and a gap between the first group G1 and the second group G2 of 53.6 mm. Although this is a super wide angle lens with a field

angle of as large as 121°, it is observed to have a predetermined optical performance in view of the aberration graph of Fig. 5. Further, since the hybrid lens has an extremely large aspherical surface, while the lenses constituting the first lens group G1 are required by the number of 5 in a case of not using the aspherical lens, the number of the first lens group G1 may be reduced to two and they can be saved by the number of three. Accordingly, reduction in the size and the cost have been attained in the projection lens 100.

## Claims

1. A resin composition for use in a hybrid lens in which the resin composition used for forming the resin layer of the hybrid lens comprising a resin layer bonded to a glass lens base material contains a radical polymerizable momomer and a silane coupling agent .

2. A resin composition for use in a hybrid lens according to claim 1, wherein the radical polymerizable monomer contains the following ingredient A and ingredient B:

   Ingredient A: a di(meth)acrylate compound represented by the following general formula (I):

   [Chemical formula 1]

   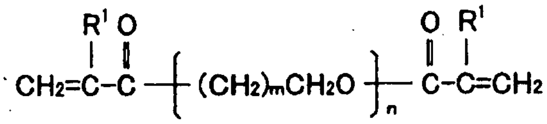

   • • • (I)

   (where $R^1$ represents hydrogen or a methyl group, m represents an integer of 2 to 5 and n represents an integer of 1 to 16)
   Ingredient B: a mono(meth)acrylate compound represented by following general formula (II):

   [Chemical formula 2]

   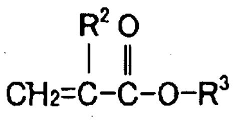

   • • • (II)

   (where $R^2$ represents hydrogen or a methyl group and $R^3$ represents a cycloaliphatic hydrocarbon group with a number of carbon atoms of from 5 to 16) .

3. A resin composition for use in a hybrid lens according to claim 2, wherein the radical polymerizable monomer further contains the following ingredient C: Ingredient C: a urethanepoly(meth)acrylate having two or more (meth)acryloyloxy groups in one molecule, or an epoxypoly(meth)acrylate having two or more (meth)acryloyloxy groups in one molecule.

4. A resin composition for use in a hybrid lens according to claim 2, wherein the content of the ingredient A is from 30 to 90 parts by weight and the content of the ingredient B is from 5 to 40 parts by weight.

5. A resin composition for use in a hybrid lens according to claim 3, wherein the content of the ingredient C is from 5 to 50 parts by weight.

6. A resin composition for use in a hybrid lens according to claim 1, wherein the content of the silane coupling agent is from 1 to 10 parts by weight.

**7.** A method of manufacturing a hybrid lens including mold assembling steps of opposing a glass lens base material and a glass mold having a diameter substantially equal with that of the glass lens base material for transferring an aspherical shape, adhering an adhesive tape on the lateral surface of them to seal a gap between the glass lens base material and the glass mold thereby assembling a hybrid lens molding die.

**8.** A manufacturing method of a hybrid lens according to claim 7, wherein the maximum thickness for the gap between the glass lens base material and the glass mold is within a range from 1 to 10 mm and the ratio of maximum thickness/minimum thickness for the gap between the glass lens base material and the glass mold within an effective diameter is 4 or more and 20 or less.

**9.** A manufacturing method of a hybrid lens according to claim 7, wherein the method comprises, after the mold assembling step, an injection step of filling an UV-ray curable resin composition into a gap between the glass lens base material and the glass mold, and
a curing step of irradiating UV-rays to the UV-ray curable resin composition filled into the gap between the glass lens base material and the glass mold from both sides of the glass lens base material and the glass mold thereby curing the UV-ray curable composition.

**10.** A manufacturing method of a hybrid lens according to claim 9, wherein the method includes, after the curing step, an annealing step of applying such a pressure as bringing the glass lens base material and the glass mold approaching to each other while heating to a temperature higher than the glass transition point of the curing product of the UV-ray curable resin composition.

**11.** A manufacturing method of a hybrid lens according to claim 9, wherein the method includes, before the curing step, a preliminary curing step of irradiating UV-rays thereby gelling the UV-ray curable resin composition.

**12.** A manufacturing method of a hybrid lens according to claim 7, wherein the glass lens base material treated with a silane coupling agent is used.

**13.** A hybrid lens wherein a resin layer formed of a resin composition for use in a hybrid lens containing a radical polymerizable monomer and a silane coupling agent is bonded to the surface of a glass lens base material.

**14.** A hybrid lens according to claim 13, wherein the maximum thickness of the resin layer is within a range from 1 to 10 mm.

**15.** A hybrid lens according to claim 14, wherein the ratio of maximum thickness/minimum thickness within the effective diameter of the resin layer is 4 or more and 20 or less.

**16.** A lens system using a hybrid lens in which a resin layer formed of a resin composition for use in a hybrid lens containing a radical polymerizable monomer and a silane coupling agent is bonded to the surface of a glass lens base material.

**17.** A lens system according to claim 16, wherein the maximum thickness of the resin layer of the hybrid lens is within a range from 1 to 10 mm.

F I G. 1

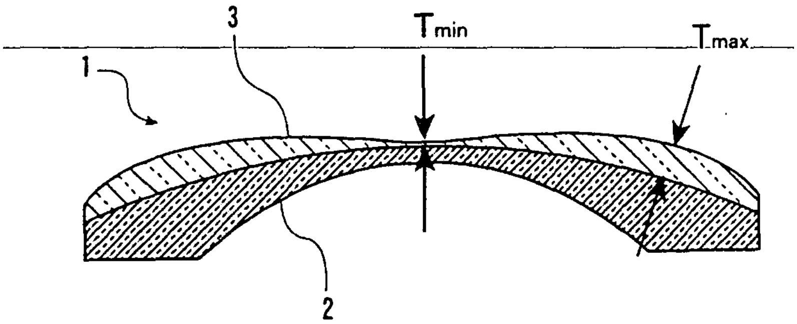

FIG. 2A

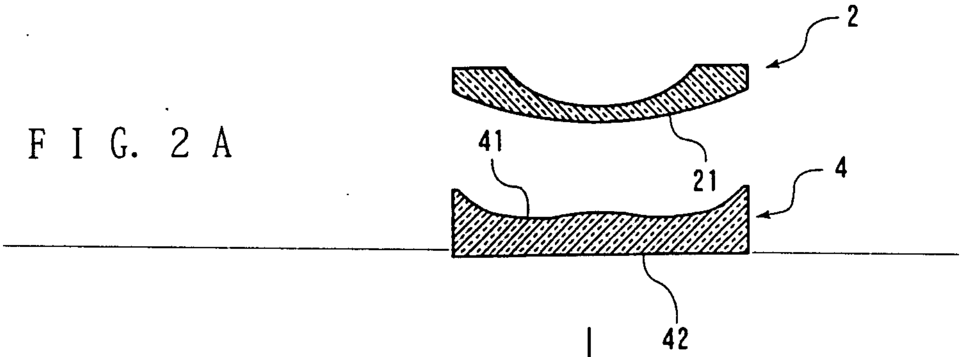


FIG. 2B

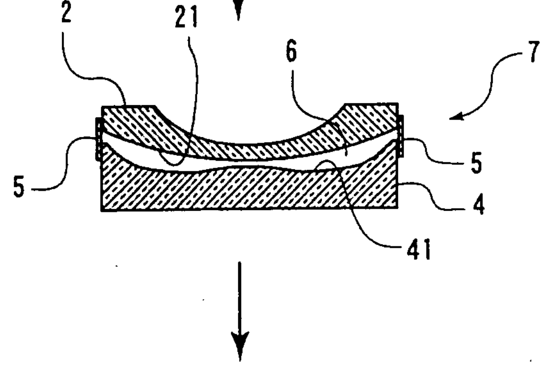


FIG. 2C

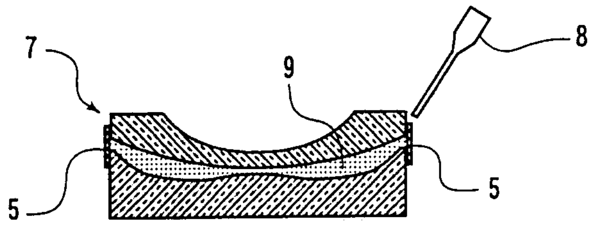


FIG. 2D

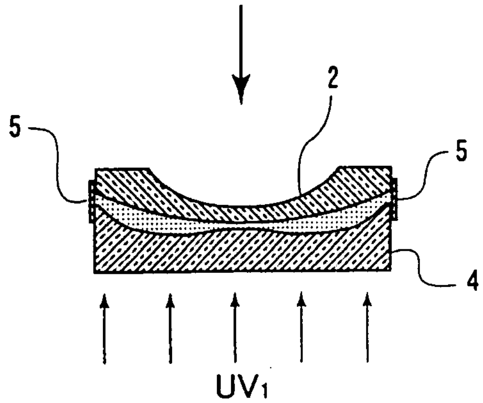

F I G. 3 E

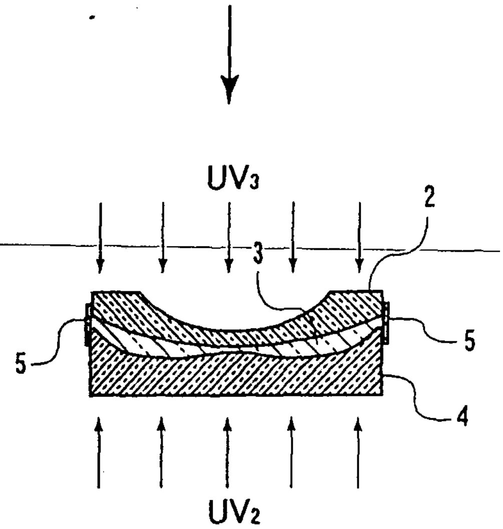


F I G. 3 F

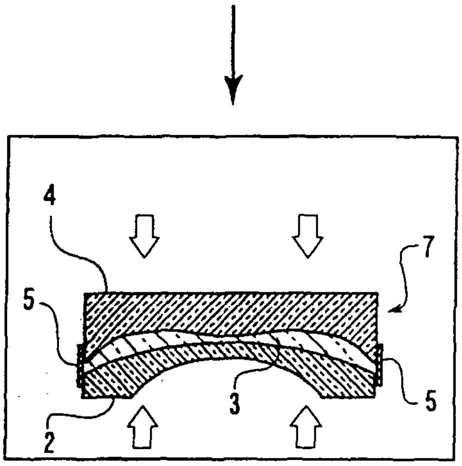


F I G. 3 G

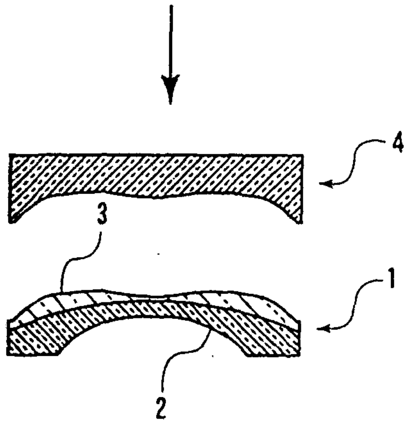

F I G. 4

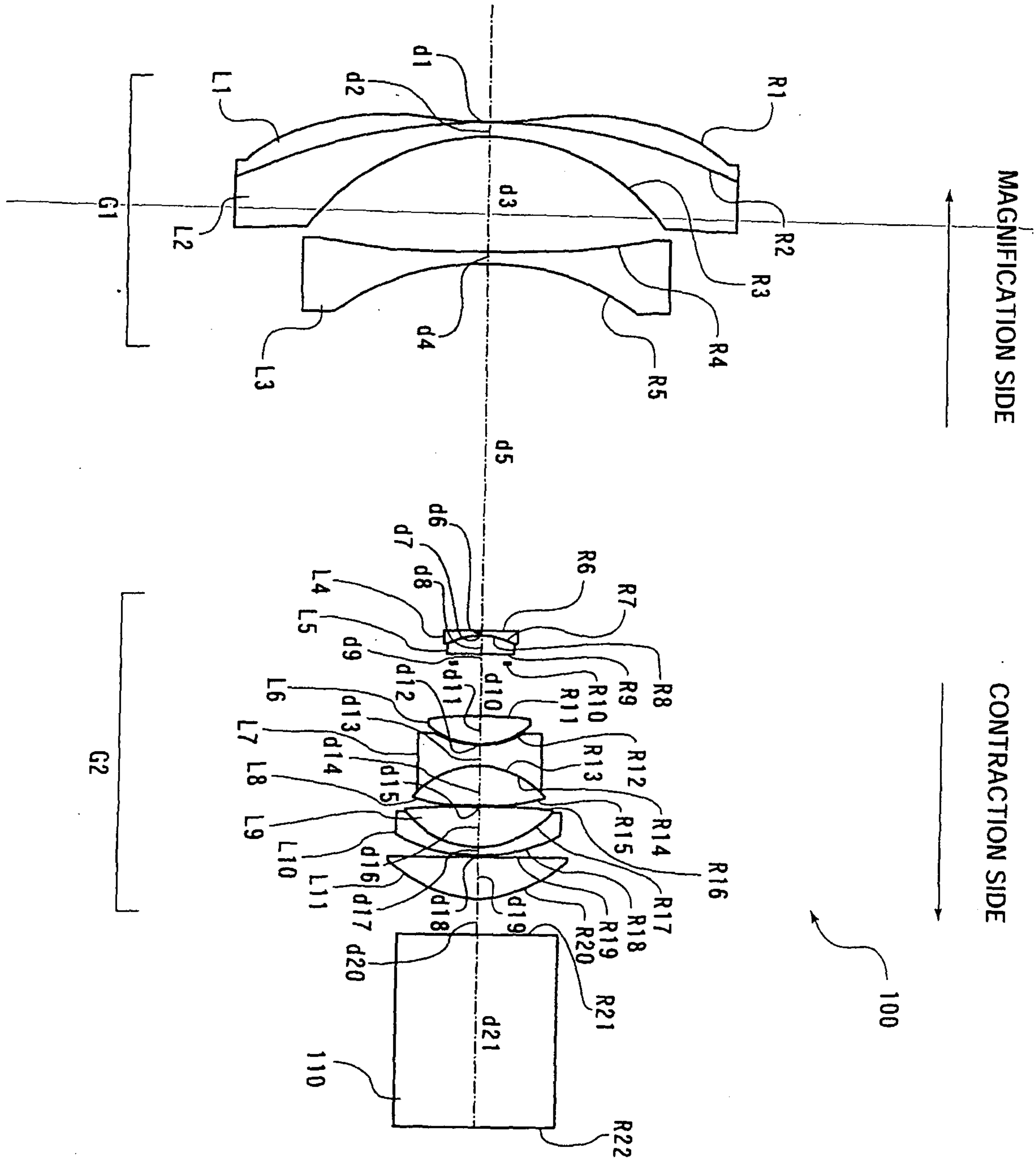
MAGNIFICATION SIDE
CONTRACTION SIDE
G1
G2
L1
L2
L3
L4
L5
L6
L7
L8
L9
L10
L11
R1
R2
R3
R4
R5
R6
R7
R8
R9
R10
R11
R12
R13
R14
R15
R16
R17
R18
R19
R20
R21
R22
d1
d2
d3
d4
d5
d6
d7
d8
d9
d10
d11
d12
d13
d14
d15
d16
d17
d18
d19
d20
d21
100
110

F I G. 5

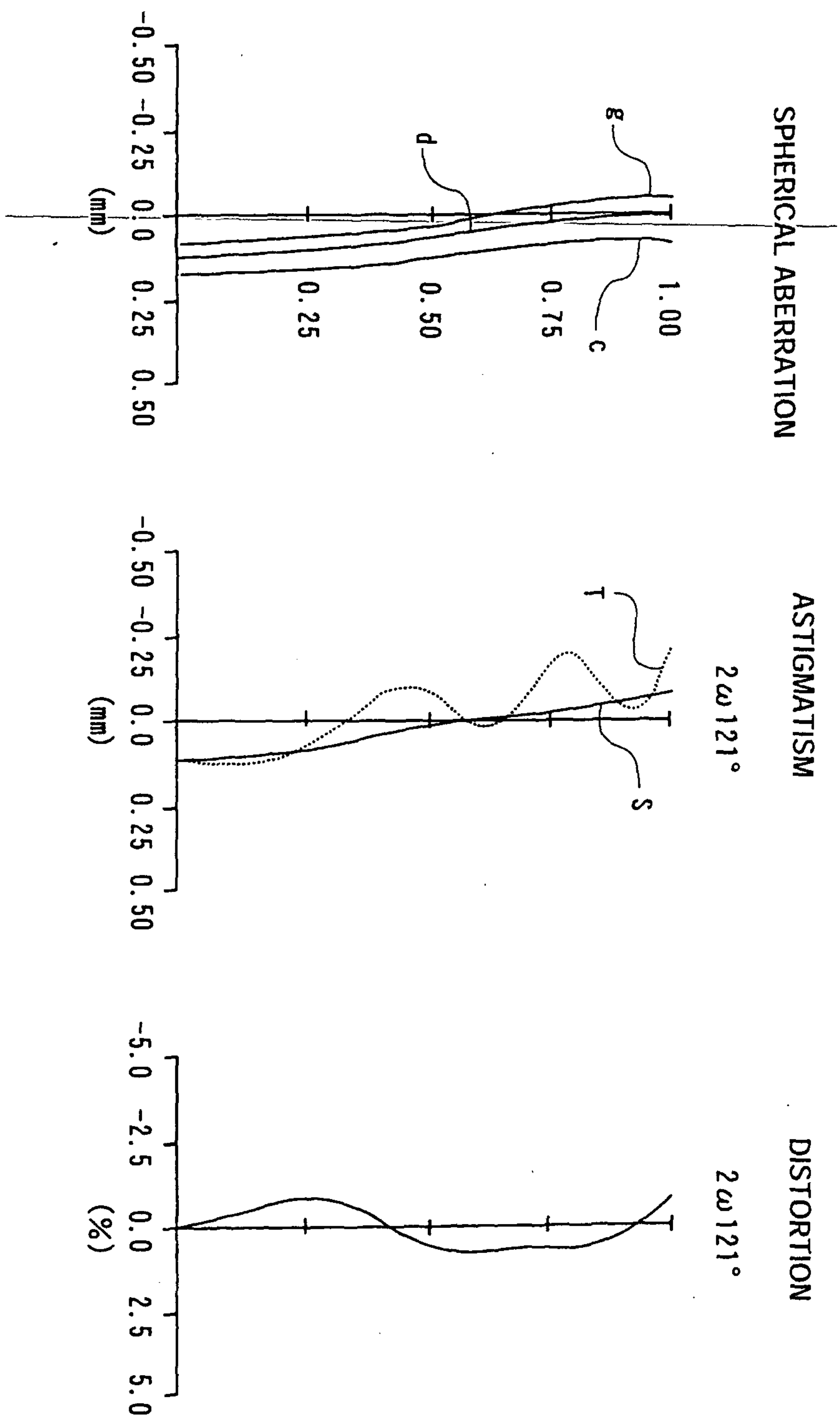
SPHERICAL ABERRATION
g
d
c
1.00
0.75
0.50
0.25
-0.50 -0.25 0.0 0.25 0.50
(mm)
ASTIGMATISM
2ω121°
T
S
-0.50 -0.25 0.0 0.25 0.50
(mm)
DISTORTION
2ω121°
-5.0 -2.5 0.0 2.5 5.0
(%)

## INTERNATIONAL SEARCH REPORT

International application No.
PCT/JP2004/005655

A. CLASSIFICATION OF SUBJECT MATTER
Int.Cl[7] G02B3/02, G02B1/04, C08L35/02, B29C39/10//B29K33:04, B29L11:00

According to International Patent Classification (IPC) or to both national classification and IPC

B. FIELDS SEARCHED

Minimum documentation searched (classification system followed by classification symbols)
Int.Cl[7] G02B3/02, G02B1/04, C08L35/02, B29C39/10//B29K33:04, B29L11:00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 9-194546 A (Mitsubishi Rayon Co., Ltd.), 29 July, 1997 (29.07.97), Claims; Par. Nos. [0008], [0010], [0019] (Family: none) | 1,6,13,16<br>2-5,7-12, 14,15,17 |
| Y | JP 2002-79797 A (Dainippon Printing Co., Ltd.), 19 March, 2002 (19.03.02), Par. Nos. [0041] to [0043] & EP 1168110 A2 & US 2002/0015897 A1 | 2-5 |
| Y | JP 9-31143 A (Mitsubishi Rayon Co., Ltd.), 04 February, 1997 (04.02.97), Par. Nos. [0015] to [0019] (Family: none) | 2-5 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>28 July, 2004 (28.07.04) | Date of mailing of the international search report<br>10 August, 2004 (10.08.04) |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/005655

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-228805 A (Nikon Corp.), 14 August, 2002 (14.08.02), Par. Nos. [0011], [0023], [0038] & US 2002/0064575 A1 | 7-12,14,15, 17 |
| Y | JP 2000-263567 A (Topcon Corp.), 26 September, 2000 (26.09.00), Par. No. [0045] (Family: none) | 10 |
| Y | JP 3-193313 A (Mitsubishi Rayon Co., Ltd., Seiko Epson Corp.), 23 August, 1991 (23.08.91), Page 2, lower left column, line 19 to lower right column, line 10 (Family: none) | 11 |

Form PCT/ISA/210 (continuation of second sheet) (January 2004)

**INTERNATIONAL SEARCH REPORT**

International application No.
PCT/JP2004/005655

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The special technical feature of claims 1 to 6 and 13 to 17 relates to "a resin composition for a hybrid lens which comprises a radically polymerizable monomer and a silane coupling agent", and the special technical feature of claims 7 to 12 relates to "a method for producing a hybrid lens which comprises a mold assembling step of arranging oppositely a glass lens base material and a glass mold for transferring a non-spherical surface having a diameter similar that of the glass lens base material and pasting a pressure-sensitive adhesive tape on the side faces thereof, to seal the interstice between the glass lens base material and the glass mold and assemble a mold for molding a hybrid lens". (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest.

☒ No protest accompanied the payment of additional search fees.

Form PCT/ISA/210 (continuation of first sheet (2)) (January 2004)

**INTERNATIONAL SEARCH REPORT**

International application No.
PCT/JP2004/005655

Continuation of Box No.III of continuation of first sheet(2)

These inventions have no technical relationship involving one or more of the same or corresponding special technical features, and therefore, are not so linked as to form a single general inventive concept.

Accordingly, the inventions of claims 1 to 6, and 13 to 17 and claims 7 to 12 do not comply with the requirement of unity of invention.

Form PCT/ISA/210 (extra sheet) (January 2004)